(19) Europäisches Patentamt
European Patent Office
Office européen des brevets

(11) Veröffentlichungsnummer: **0 310 977 A2**

# (12) EUROPÄISCHE PATENTANMELDUNG

(21) Anmeldenummer: **88116278.8**

(22) Anmeldetag: **01.10.88**

(51) Int. Cl.[4]: **C08L 67/02 , C08K 7/14 , //(C08L67/02,51:04,25:12)**

(30) Priorität: **07.10.87 DE 3733829**
**07.10.87 DE 3733824**

(43) Veröffentlichungstag der Anmeldung:
**12.04.89 Patentblatt 89/15**

(84) Benannte Vertragsstaaten:
**BE DE FR GB NL**

(71) Anmelder: **BASF Aktiengesellschaft**
**Carl-Bosch-Strasse 38**
**D-6700 Ludwigshafen(DE)**

(72) Erfinder: **Seiler, Erhard, Dr.**
**Erpolzheimer Strasse 1**
**D-6700 Ludwigshafen(DE)**
Erfinder: **Ruppmich, Karl**
**Koenigsbacher Strasse 134**
**D-6700 Ludwigshafen(DE)**
Erfinder: **Knoll, Manfred**
**Pfrimmstrasse 1**
**D-6521 Wachenheim(DE)**
Erfinder: **Heckmann, Walter, Dr.**
**Geiersbergstrasse 2**
**D-6940 Weinhem(DE)**
Erfinder: **Lausberg, Dietrich, Dr.**
**Nachtigalstrasse 32 a**
**D-6700 Ludwigshafen(DE)**
Erfinder: **Bueschl, Rainer, Dr.**
**Hollandstrasse 14**
**D-6701 Roedershem-Gronau(DE)**

## (54) Glasfaserverstärkte thermoplastische Formmassen auf der Basis von Polyestern und Pfropfpolymerisaten.

(57) Thermoplastische Formmassen auf der Basis von thermoplastischen Polyestern ($a_1$), Pfropfpolymerisaten mit Acrylatkautschuken als Pfropfgrundlage ($a_2$), Copolymeren aus vinylaromatischen Monomeren und Acrylnitril oder Methacrylnitril ($a_3$), die entweder eine polymere Komponente (B) mit Carboxyl-, Carboxylderivat-, Hydroxyl- oder Epoxy-Gruppen enthalten, oder bei denen die Pfropfpolymerisate ($a_2$) oder die Copolymeren ($a_3$) derartige Gruppen tragen, zeigen an ausgewogenes Eigenschaftsspektrum.

EP 0 310 977 A2

Xerox Copy Centre

## Glasfaserverstärkte thermoplastische Formmassen auf der Basis von Polyestern und Pfropfpolymerisaten

Die Erfindung betrifft thermoplastische Formmassen, enthaltend als wesentliche Komponenten

A) 45 bis 90 Gew.% einer Mischung aus

$a_1$) 50 bis 80 Gew.% eines Polyesters

$a_2$) 10 bis 25 Gew.% eines Pfropfpolymerisats aufgebaut aus

$a_{21}$) 50 bis 90 Gew.% einer Pfropfgrundlage aus einem kautschukelastischen Polymeren auf Basis von

$a_{211}$) 95 bis 99,9 Gew.% eines $C_2$-$C_{10}$-Alkylacrylats und

$a_{212}$) 0,1 bis 5 Gew.% eines polyfunktionellen Monomeren mit mindestens zwei olefinischen, nicht konjugierten Doppelbindungen

$a_{22}$) 10 bis 50 Gew.% einer Pfropfauflage aus

$a_{221}$) 50 bis 90 Gew.% Styrol oder substituierten Styrolen der allgemeinen Formel I

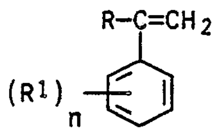

(I)

wobei R einen Alkylrest mit 1 bis 8 C-Atomen, ein Wasserstoffatom oder ein Halogenatom und $R^1$ einen Alkylrest mit 1 bis 8 C-Atomen oder ein Halogenatom darstellen und n den Wert 0, 1, 2 oder 3 hat oder deren Mischungen und

$a_{222}$) 10 bis 49 Gew.% Acrylnitril oder Methacrylnitril oder deren Mischungen

$a_{223}$) 0 bis 30 Gew.% eines polymerisierbaren Monomeren mit Carboxyl-, Carboxylderivat-, Hydroxyl- oder Epoxygruppen,

und

$a_3$) 10 bis 25 Gew.% eines Copolymerisats aus

$a_{31}$) 50 bis 90 Gew.% Styrol oder substituierten Styrolen der allgemeinen Formel I oder deren Mischungen und

$a_{32}$) 10 bis 49 Gew.% Acrylnitril oder Methacrylnitril oder deren Mischungen,

$a_{33}$) 0 bis 30 Gew.% eines polymerisierbaren Monomeren mit Carboxyl-, Carboxylderivat-, Hydroxyl- oder Epoxygruppen,

B) 0 bis 20 Gew.% einer polymeren Komponente mit Carboxyl-, Carboxylderivat-, Hydroxyl- oder Epoxygruppen, und

C) 5 bis 50 Gew.% Glasfasern,

mit der Maßgabe, daß mindestens eine der reaktiven Komponenten $a_{223}$), $a_{33}$) oder B) vorhanden ist.

Außerdem betrifft die Erfindung die Verwendung derartiger Formmassen zur Herstellung von Formkörpern und Formkörper, die aus den erfindungsgemäßen Formmassen als wesentlichen Komponenten erhältlich sind.

In der DE-B-27 58 497 (US 4,148,956) werden thermoplastische Formmassen auf der Basis von Polyestern und modifizierten Styrol/Acrylnitril (SAN)-Copolymeren beschrieben, wobei als Modifizierungsmittel Acrylester und/oder $\alpha$-Methylstyrol eingesetzt werden. In den Beispielen werden sogenannte ASA-Polymere als modifizierte SAN-Polymere eingesetzt. Falls in diesen Massen das modifizierte SAN-Polymere die Hauptkomponente darstellt, lassen sich vorteilhaft Folien daraus herstellen. Die mechanischen Eigenschaften sind jedoch insgesamt noch nicht voll zufriedenstellend, insbesondere im Hinblick auf die Schlagzähigkeit und Biegefestigkeit. Auch die Stabilität der Eigenschaften nach längerer Lagerung bei höheren Temperaturen ist nicht befriedigend.

Der vorliegenden Erfindung lag daher die Aufgabe zugrunde, thermoplastische Formmassen auf der Basis von Polyestern und Pfropfpolymeren zur Verfügung zu stellen, die die vorstehend beschriebenen Nachteile nicht aufweisen. Insbesondere sollte auch eine zufriedenstellende Langzeitstabilität der mechanischen Eigenschaften bei erhöhten Temperaturen erreicht werden.

Diese Aufgabe wird erfindungsgemäß durch die eingangs definierten thermoplastischen Formmassen

gelöst.

Als Komponente A enthalten die erfindungsgemäßen Formmassen 45 bis 90, insbesondere 55 bis 90 und besonders bevorzugt 60 bis 85 Gew.% einer Mischung aus

$a_1$) 50 bis 80 Gew.% eines Polyesters

$a_2$) 10 bis 25 Gew.% eines Pfropfpolymerisats und

$a_3$) 10 bis 25 Gew.% eines Styrol-(Meth)-Acrylnitril-Copolymerisats.

Die in den erfindungsgemäßen Formmassen enthaltenen Polyester $a_1$) sind an sich bekannt. Vorzugsweise werden Polyester verwendet, die einen aromatischen Ring in der Hauptkette enthalten. Der aromatische Ring kann auch substituiert sein, z.B. durch Halogene, wie Chlor und Brom und/oder durch $C_1$-$C_4$-Alkylgruppen, wie z.B. Methyl-, Ethyl-, i- bzw. n-Propyl- und i- bzw. n- bzw. t-Butylgruppen.

Die Herstellung der Polyester kann durch Reaktion von Dicarbonsäuren, deren Estern oder anderer esterbildender Derivate mit Dihydroxyverbindungen in an sich bekannter Weise erfolgen.

Als Dicarbonsäuren kommen beispielsweise aliphatische und aromatische Dicarbonsäuren in Frage, die auch als Mischung eingesetzt werden können. Nur beispielsweise seien hier Naphthalindicarbonsäuren, Terephthalsäure, Isophthalsäure, Adipinsäure, Azelainsäure, Sebacinsäure, Dodecandisäure und Cyclohexandicarbonsäuren, Mischungen dieser Carbonsäuren und esterbildende Derivate derselben genannt.

Als Dihydroxyverbindungen werden vorzugsweise Diole mit 2 bis 6 C-Atomen, besonders bevorzugt Ethylenglykol, 1,4-Butandiol, 1,4-Butendiol und 1,6-Hexandiol verwendet; es können jedoch auch 1,4-Hexandiol, 1,4-Cyclohexandiol, 1,4-Di-(hydroxymethyl)cyclohexan, Bisphenol A, Neopentylglykol, Mischungen dieser Diole sowie esterbildende Derivate derselben eingesetzt werden.

Polyester aus Terephthalsäure und einer $C_2$-$C_6$-Diolkomponente, z.B. Polyethylenterephthalat oder Polybutylenterephthalat oder deren Mischungen werden besonders bevorzugt.

Die relative Viskosität $\eta_{spec}/c$ der Polyester, gemessen an einer 0,5 gew.%igen Lösung in einem Phenol/o-Dichlorbenzolgemisch (Gewichtsverhältnis 3:2) bei 25 °C, liegt im allgemeinen im Bereich von 1,2 bis 1,8 dl/g.

Der Anteil der Polyester $a_1$) an der Komponente A beträgt 50 bis 80, vorzugsweise 50 bis 75 und insbesondere 50 bis 70 Gew.%, bezogen auf das Gesamtgewicht der Komponenten $a_1$) + $a_2$) + $a_3$).

Das Pfropfpolymerisat $a_2$), welches 10 bis 25, insbesondere 12 bis 25, besonders bevorzugt 12 bis 20 Gew.% der Komponente A ausmacht, ist aufgebaut aus

$a_{21}$) 50 bis 90 Gew.% einer Pfropfgrundlage auf Basis von

$a_{211}$) 95 bis 99,9 Gew.% eines $C_2$-$C_{10}$-Alkylacrylats und

$a_{212}$) 0,1 bis 5 Gew.% eines polyfunktionellen Monomeren mit mindestens zwei olefinischen, nicht konjugierten Doppelbindungen, und

$a_{22}$) 10 bis 50 Gew.% einer Pfropfauflage aus

$a_{221}$) 50 bis 90 Gew.% Styrol oder substituierten Styrolen der allgemeinen Formel I oder deren Mischungen, und

$a_{222}$) 10 bis 50 Gew.% Acrylnitril oder Methacrylnitril oder deren Mischungen,

$a_{223}$) 0 bis 30 Gew.% eines polymerisierbaren Monomeren mit Carboxyl-, Carboxylderivat-, Hydroxyl- oder Epoxygruppen.

Bei der Komponente $a_{21}$) handelt es sich um ein Elastomeres, welches eine Glasübergangstemperatur von unter -20, insbesondere unter -30 °C aufweist.

Für die Herstellung des Elastomeren werden als Hauptmonomere $a_{211}$) Ester der Acrylsäure mit 2 bis 10 C-Atomen, insbesondere 4 bis 8 C-Atomen eingesetzt. Als besonders bevorzugte Monomere seien hier tert.-, iso- und n-Butylacrylat sowie 2-Ethylhexylacrylat genannt, von denen die beiden letztgenannten besonders bevorzugt werden.

Neben diesen Estern der Acrylsäure werden 0;1 bis 5, insbesondere 1 bis 4 Gew.%, bezogen auf das Gesamtgewicht $a_{211}$ + $a_{212}$, eines polyfunktionellen Monomeren mit mindestens zwei olefinischen, nicht konjugierten Doppelbindungen eingesetzt. Von diesen werden difunktionelle Verbindungen, d.h. mit zwei nicht konjugierten Doppelbindungen bevorzugt verwendet. Beispielsweise seien hier Divinylbenzol, Diallylfumarat, Diallylphthalat, Triallylcyanurat, Triallylisocyanurat, Tricyclodecenylacrylat und Dihydrodicyclopentadienylacrylat genannt, von denen die beiden letzten besonders bevorzugt werden.

Verfahren zur Herstellung der Pfropfgrundlage $a_{21}$) sind an sich bekannt und z.B. in der DE-B 1 260 135 beschrieben. Entsprechende Produkte sind auch kommerziell im Handel erhältlich.

Als besonders vorteilhaft hat sich in einigen Fällen die Herstellung durch Emulsionspolymerisation

erwiesen.

Die genauen Polymerisationsbedingungen, insbesondere Art, Dosierung und Menge des Emulgators werden vorzugsweise so gewählt, daß der Latex des Acrylsäureesters, der zumindest teilweise vernetzt ist, eine mittlere Teilchengröße (Gewichtsmittel $d_{50}$) im Bereich von etwa 200 bis 700, insbesondere von 250 bis 600 nm aufweist. Vorzugsweise hat der Latex eine enge Teilchengrößenverteilung, d.h. der Quotient

$$Q = \frac{d_{90} - d_{10}}{d_{50}}$$

ist vorzugsweise kleiner als 0,5, insbesondere kleiner als 0,35.

Der Anteil der Pfropfgrundlage $a_{21}$) am Pfropfpolymerisat $a_2$) beträgt 50 bis 90, vorzugsweise 55 bis 85 und insbesondere 60 bis 80 Gew.%, bezogen auf das Gesamtgewicht von $a_2$).

Auf die Pfropfgrundlage $a_{21}$) ist eine Pfropfhülle $a_{22}$) aufgepfropft, die durch Copolymerisation von

$a_{221}$) 50 bis 90, vorzugsweise 60 bis 90 und insbesondere 65 bis 80 Gew.% Styrol oder substitierten Styrolen der allgemeinen Formel I

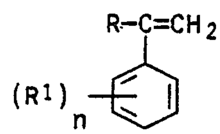

wobei R Alkylreste mit 1 bis 8 C-Atomen, Wasserstoffatome oder Halogenatome und $R^1$ Alkylreste mit 1 bis 8 C-Atomen oder Halogenatome darstellen und n den Wert 0, 1, 2 oder 3 hat, und

$a_{222}$) 10 bis 50, vorzugsweise 10 bis 40 und insbesondere 20 bis 35 Gew.% Acrylnitril oder Methacrylnitril oder deren Mischungen und

$a_{223}$) 0 bis 30 Gew.% eines polymerisierbaren Monomeren mit Carboxyl-, Carboxylderivat-, Hydroxyl- oder Epoxygruppen erhältlich ist.

Beispiele für substituierte Styrole sind α-Methylstyrol, p-Methylstyrol, p-Chlorstyrol und p-Chlor-α-Methylstyrol, wovon Styrol und α-Methylstyrol bevorzugt werden.

Die Pfropfhülle $a_{22}$) kann in einem oder in mehreren, z.B. zwei oder drei, Verfahrensschritten hergestellt werden, die Bruttozusammensetzung bleibt davon unberührt.

Falls Monomere $a_{223}$) vorhanden sind, beträgt deren Anteil an der Pfropfhülle $a_{22}$) 0,1 bis 30, vorzugsweise 0,2 bis 20 und insbesondere 0,5 bis 10 Gew.%, bezogen auf das Gesamtgewicht von $a_{22}$).

Beispiele für Monomere $a_{223}$) sind Methacrylsäureglycidylester, Acrylsäureglycidylester, Allylglycidylether, Vinylglycidylether und Itaconsäureglycidylester, sowie Acrylsäure, Methacrylsäure und ihre Metall-, insbesondere Alkalimetallsalze und Ammoniumsalze, tert.-Butyl(meth)acrylat, Maleinsäure, Maleinsäureanhydrid, Metallsalze des sauren Monoethylesters der Maleinsäure, Fumarsäure, Fumarsäuremonoethylester, Itaconsäure, Vinylbenzoesäure, Vinylphthalsäure, Salze von Fumarsäuremonoethylester, Monoester von Maleinsäure, Fumarsäure und Itaconsäure mit Alkoholen ROH, wobei R bis zu 29 Kohlenstoffatomen aufweist, z.B. Methyl, Propyl, Isopropyl, Butyl, Isobutyl, Hexyl, Cyclohexyl, Octyl, 2-Ethylhexyl, Decyl, Stearyl, Methoxyethyl, Ethoxyethyl und Hydroxyethyl.

Maleinsäureanhydrid und Metallsalze (insbesondere Alkalimetall und Erdalkalimetallsalze) von polymerisierbaren Carbonsäuren weisen zwar keine freien Carboxylgruppen auf, kommen aber in ihrem Verhalten den freien Säuren nahe, so daß sie hier von dem Oberbegriff carboxylgruppenhaltige Monomere mit umfaßt werden sollen.

Als zweite Gruppe von Monomeren $a_{223}$) sind Lactamgruppen enthaltende Monomere geeignet.

Diese enthalten eine Lactamgruppe der allgemeinen Formel

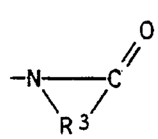

wobei $R^3$ eine verzweigte oder lineare Alkylengruppe mit 2 bis 15 C-Atomen darstellt.

Nur stellvertretend seien hier β-Propiolactame (Azetidin-2-one) der allgemeinen Formel

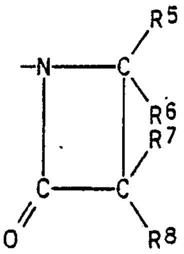

wobei die Substituenten $R^5$ bis $R^8$ eine Alkylgruppe mit 1 bis 6 C-Atomen oder ein Wasserstoffatom sein können, genannt. Diese werden von R. Graf in Angew. Chem. 74 (1962), 523-530 und H. Bastian in Angew. Chem. 80 (1968), 304-312 beschrieben. Beispiele hierfür sind 3,3′-Dimethyl-3-propiolactam, 2-Pyrrolidone

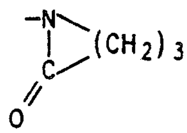

,

ε-Caprolactam

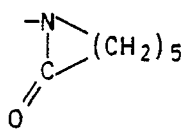

,

7-Önantholactam, 8-Capryllactam und 12 Laurinlactam, wie sie auch von H. Dachs, Angew. Chemie 74 (1962), 540-45 beschrieben werden.

Von diesen werden 2-Pyrrolidone und ε-Caprolactame besonders bevorzugt.

Vorzugsweise sind die Lactamgruppen wie in

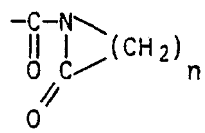

über eine Carbonylgruppe am Stickstoff in die entsprechenden Monomeren eingebaut.

Ein besonders bevorzugtes Beispiel hierfür ist N-(Meth)acryloyl-ε-Caprolactam

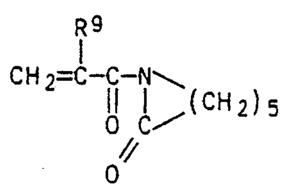

wobei $R^9$ ein Wasserstoffatom oder eine Methylgruppe ist.

Bevorzugte Monomere $a_{223}$) sind Glycidylester der Acrylsäure und Methacrylsäure, Maleinsäureanhydrid, tert.-Butylacrylat, Fumarsäure und Maleinsäure.

Vorzugsweise wird die Pfropfhülle in Emulsion hergestellt, wie dies z.B. in der DE-PS 1 260 135, DE-OS 32 27 555, DE-OS 31 49 357 und der DE-OS 34 14 118 beschrieben ist.

Je nach den gewählten Bedingungen entsteht bei der Pfropfmischpolymerisation ein bestimmter Anteil an freien Copolymerisaten der Monomeren $a_{221}$), $a_{222}$) und $a_{223}$).

Das Pfropfmischpolymerisat ($a_{21}$ + $a_{22}$) weist im allgemeinen eine mittlere Teilchengröße von 100 bis 1000 nm, im besonderen von 200 bis 700 nm ($d_{50}$-Gewichtsmittelwert) auf. Die Bedingungen bei der

Herstellung des Elastomeren $a_{21}$) und bei der Pfropfung werden daher vorzugsweise so gewählt, daß Teilchengrößen in diesem Bereich resultieren. Maßnahmen hierzu sind bekannt und z.B. in der DE-PS 1 260 135 und der DE-OS 28 26 925 sowie in Journal of Applied Polymer Science, Vol. 9 (1965), S. 2929 bis 2938 beschrieben. Die Teilchenvergrößerung des Latex des Elastomeren kann z.B. mittels Agglomeration bewerkstelligt werden.

Zum Pfropfpolymerisat $a_2$ zählen im Rahmen dieser Erfindung auch die bei der Pfropfmischpolymerisation zur Herstellung der Komponente $a_{22}$) entstehenden freien, nicht gepfropften Homo- und Copolymerisate.

Nachstehend seien einige bevorzugte Pfropfpolymerisate angeführt:

1: 60 Gew.% Pfropfgrundlage $a_{21}$) aus
$a_{211}$) 98 Gew.% n-Butylacrylat und
$a_{212}$) 2 Gew.% Dihydrodicyclopentadienylacrylat und 40 Gew.% Pfropfhülle $a_{22}$) aus
$a_{221}$) 71 Gew.% Styrol und
$a_{222}$) 24 Gew.% Acrylnitril
$a_{223}$) 5 Gew.% Glycidylmethacrylat

2: Pfropfgrundlage wie bei 1 mit 5 Gew.% einer ersten Pfropfhülle aus Styrol
und
35 Gew.% einer zweiten Pfropfstufe aus
$a_{221}$) 71 Gew.% Styrol und
$a_{222}$) 24 Gew.% Acrylnitril
$a_{223}$) 5 Gew.% Glycidylmethacrylat

3: Pfropfgrundlage wie bei 1 mit 13 Gew.% einer ersten Pfropfstufe aus Styrol und 27 Gew.% einer zweiten Pfropfstufe aus Styrol, Acrylnitril und Glycidylmethacrylat im Gewichtsverhältnis 72:24:4.

4: 60 Gew.% Pfropfgrundlage $a_{21}$) aus
$a_{211}$) 98 Gew.% n-Butylacrylat und
$a_{212}$) 2 Gew.% Dihydrodicyclopentadienylacrylat und 40 Gew.% Pfropfhülle $a_{22}$) aus
$a_{221}$) 71 Gew.% Styrol und
$a_{222}$) 24 Gew.% Acrylnitril

5: Pfropfgrundlage wie bei 4 mit 5 Gew.% einer ersten Pfropfhülle aus Styrol
und
35 Gew.% einer zweiten Pfropfstufe aus
$a_{221}$) 71 Gew.% Styrol und
$a_{222}$) 24 Gew.% Acrylnitril

6: Pfropfgrundlage wie bei 4 mit 13 Gew.% einer ersten Pfropfstufe aus Styrol und 27 Gew.% einer zweiten Pfropfstufe aus Styrol und Acrylnitril im Gewichtsverhältnis 72:24:4.

Als Komponente $a_3$) enthalten die erfindungsgemäßen Formmassen 10 bis 25, vorzugsweise 12 bis 20 Gew.% eines Copolymerisats aus

$a_{31}$) 50 bis 90, vorzugsweise 55 bis 90 und insbesondere 65 bis 80 Gew.% Styrol und/oder substituierten Styrolen der allgemeinen Formel I und

$a_{32}$) 10 bis 50, vorzugsweise 10 bis 45 und insbesondere 20 bis 35 Gew.% Acrylnitril und/oder Methacrylnitril.

$a_{33}$) 0 bis 30 Gew.% eines polymerisierbaren Monomeren mit Carboxyl-, Carboxylderivat-, Hydroxyl- oder Epoxygruppen.

Hinsichtlich der Monomeren $a_{33}$) gilt das vorstehend für die Komponente $a_{223}$) Gesagte, worauf hier zur Vermeidung von Wiederholungen vermieden wird.

Derartige Produkte können z.B. nach dem in den DE-AS 10 01 001 und DE-AS 10 03 436 beschriebenen Verfahren hergestellt werden. Auch im Handel sind solche Copolymere erhältlich. Vorzugsweise liegt der durch Lichtstreuung bestimmte Gewichtsmittelwert des Molekulargewichts im Bereich von 50.000 bis 500.000, insbesondere von 100.000 bis 250.000.

Das Gewichtsverhältnis von $a_2$:$a_3$ liegt im Bereich von 1:2,5 bis 3:1, vorzugsweise von 1:2 bis 2,5:1 und insbesondere von 1:1,5 bis 2:1.

Als Komponente B enthalten die erfindungsgemäßen Formmassen 5 bis 20, vorzugsweise 1 bis 15 und

insbesondere 2 bis 12 Gew.% einer polymeren Komponente mit Carboxyl-, Carboxylderivat-, Hydroxyl- oder Epoxygruppen.

Grundsätzlich eignen sich alle Arten von Polymerisaten, in denen die Carboxyl-, Hydroxyl- oder Epoxygruppen im wesentlichen frei zur Verfügung stehen.

Nachstehend werden einige besonders bevorzugte Beispiele derartiger funktioneller Polymerer näher beschrieben.

Als erste Gruppe seien hier elastomere Polymere mit Epoxy- und/oder Carboxylgruppen an der Oberfläche genannt.

Für die Erfindung ist dabei wesentlich, daß die haftvermittelnden Epoxy-und/oder Carboxylgruppen an der Oberfläche vorhanden sind und daß der Gelgehalt mindestens 50 % beträgt.

Vorzugsweise werden durch Emulsionspolymerisation hergestellte Pfropfpolymere mit Glasübergangstemperaturen unter 0 °C und Gelgehalten von mehr als 50 % eingesetzt.

Der hohe Gelgehalt des elastomeren Polymerisats bringt eine Verbesserung der mechanischen Eigenschaften und der Oberflächengüte der Formmassen mit sich. Der hohe Gelgehalt bringt es auch mit sich, daß die Fließfähigkeit der Polymeren B) nur sehr gering ist, so daß ein Schmelzindex häufig unter normalen Bedingungen nicht bestimmbar ist. Die Polymeren zeigen vielmehr ein elastisches Verhalten, d.h. sie reagieren auf die Einwirkung einer formverändernden Kraft mit einer elastischen Rückstellkraft (vgl. B. Vollmert, Grundriß der makromolekularen Chemie, Bd. IV, S. 85 ff, E. Vollmert, Verlag Karlsruhe 1979).

Bedingt durch ihre Herstellung in Emulsion liegen die Teilchen der Komponente B) als vernetzte Dispersionsteilchen vor.

Die elastomeren Pfropfpolymere, die aus einem in Emulsion hergestellten Kautschuk mit einer Glasübergangstemperatur von unter 0 °C aufgebaut sind, und an der Oberfläche Epoxy- oder Carboxylgruppen aufweisen, können durch Emulsionspolymerisation in an sich bekannter Weise, wie sie z.B. in Houben-Weyl, Methoden der organischen Chemie, Band XII. I (1961) beschrieben wird, hergestellt werden. Die verwendbaren Emulgatoren und Katalysatoren sind an sich bekannt.

Nur stellvertretend seien hier als Monomere für die Herstellung des Kautschuks Acrylate wie z.B. n-Butylacrylat und 2-Ethylhexylacrylat, Methacrylate sowie Butadien und Isopren genannt. Diese Monomeren können auch mit anderen Monomeren wie z.B. Styrol, Acrylnitril und Vinylethern copolymerisiert werden.

Monomere, die eine Kopplung an die Komponente A) bewirken können, sind solche, die Epoxy und/oder Carboxyl-Gruppen enthalten. Beispiele für solche Monomeren sind Methacrylsäureglycidylester, Acrylsäureglycidylester, Allylglycidylether, Vinylglycidylether und Itaconsäureglycidylester, sowie Acrylsäure, Methacrylsäure und ihre Metall-, insbesondere Alkalimetallsalze und Ammoniumsalze, Maleinsäure, Maleinsäureanhydrid, Metallsalze des sauren Monoethylesters der Maleinsäure, Fumarsäure, Fumarsäuremonoethylester, Itaconsäure, Vinylbenzoesäure, Vinylphthalsäure, Salze von Fumarsäuremonoethylester, Monoester von Maleinsäure, Fumarsäure und Itaconsäure mit Alkoholen ROH, wobei R bis zu 29 Kohlenstoffatomen aufweist, z.B. Methyl, Propyl, Isopropyl, Butyl, Isobutyl, Hexyl, Cyclohexyl, Octyl, 2-Ethylhexyl, Decyl, Stearyl, Methoxyethyl, Ethoxyethyl und Hydroxyethyl.

Maleinsäureanhydrid und Metallsalze (insbesondere Alkalimetall und Erdalkalimetallsalze) von polymerisierbaren Carbonsäuren weisen zwar keine freien Carboxylgruppen auf, kommen aber in ihrem Verhalten den freien Säuren nahe, so daß sie hier von dem Oberbegriff carboxylgruppenhaltige Monomere mit umfaßt werden sollen.

Die durch Emulsionspolymerisation hergestellten Pfropfpolymeren (Dispersionspolymeren) können mehrschalig sein, z.B. kann der Kern und die äußere Schale gleich sein, außer daß die äußere Schale zusätzliche Gruppen enthält, die eine Haftung der Komponente A) ermöglicht. Beispiele dafür sind ein innerer Kern aus n-Butylacrylat und eine äußere Schale aus n-Butylacrylat und Glycidylmethacrylat, oder ein innerer Kern aus Butadien und einer äußeren Schale aus Butadien und Glycidylmethacrylat. Der Kern und die Schale können jedoch auch verschieden aufgebaut sein, z.B. ein innerer Kern aus Butadien und eine äußere Schale aus n-Butylacrylat und Glycidylmethacrylat.

Natürlich kann der Kautschuk auch homogen aufgebaut sein, z.B. einschalig aus einem Copolymer von n-Butylacrylat und Glycidylmethacrylat oder Butadien und Glycidylmethacrylat.

Die Kautschukteilchen können auch vernetzt sein. Als Vernetzer wirkende Monomere sind beispielsweise Butadien, Divinylbenzol, Diallylphthalat und Dihydrodicyclopentadienylacrylat geeignet. Der Anteil dieser Vernetzer an der Komponente B) beträgt vorzugsweise unter 5 Gew.%, bezogen auf B).

Als weitere Beispiele für die Komponente B) seien Copolymere, aufgebaut aus Styrol und/oder substituierten Styrolen der allgemeinen Formel I und Epoxy- oder Lactamgruppen enthaltenden Monomeren genannt.

Der Anteil des Styrols und/oder der substituierten Styrole der an der Komponente B liegt im allgemeinen im Bereich von 50 bis 99,9 Gew.%, vorzugsweise von 70 bis 95 Gew.%.

Selbstverständlich können auch Mischungen verschiedener substituierter Styrole oder Mischungen aus Styrol und substituierten Styrolen eingesetzt werden, was häufig sogar Vorteile mit sich bringt.

Durch Mitverwendung von Monomeren mit Epoxy- oder Lactamgruppen bei der Polymerisation des Styrols und/oder der substituierten Styrole werden die erfindungsgemäßen Komponenten B, die sich von Styrolpolymerisaten ableiten, hergestellt.

Unter den Monomeren, die Epoxygruppen

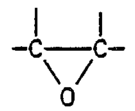

enthalten, werden solche mit mehreren Epoxygruppen bevorzugt. Grundsätzlich sind alle Epoxygruppen enthaltenden Monomeren geeignet, solange gewährleistet ist, daß die Epoxygruppe nach der Umsetzung in freier Form vorliegt.

Es sei hier erwähnt, daß die Einführung der freien Epoxygruppen in das Polymere B auch durch Epoxidierung von Polymeren aus den Monomeren mit Epoxidierungsmitteln möglich ist.

Der Anteil des Epoxygruppen enthaltenden Monomeren beträgt 0,1 bis 30 Gew.%, bevorzugt 0,5 bis 20 Gew.% und besonders bevorzugt 1 bis 10 Gew.%, bezogen auf die Komponente B.

Nur beispielhaft seien hier als Vertreter für Epoxygruppen enthaltende Monomere Glycidylgruppen enthaltende Monomere genannt, z.B. Vinylglycidylether, Allylglycidylether und (Meth)acrylate mit Glycidylgruppen, insbesondere Glycidylacrylat und Glycidylmethacrylat.

Als bevorzugte Komponenten B, die sich von Styrolpolymerisaten mit Epoxygruppen ableiten, seien stellvertretend Copolymere aus

$B_1$) 90 bis 99 Gew.% Styrol, α-Methylstyrol und/oder p-Methylstyrol

$B_2$) 1 bis 10 Gew.% Glycidyl(meth)acrylat

oder

$B_1$) 50 bis 91 Gew.% Styrol, α-Methylstyrol und/oder p-Methylstyrol

$B_2$) 1 bis 10 Gew.% Glycidyl(meth)acrylat

$B_3$) 8 bis 40 Gew.% Acrylnitril und/oder Methacrylnitril

genannt.

Als zweite Gruppe von Monomeren sind Lactamgruppen enthaltende Monomere geeignet.

Diese enthalten eine Lactamgruppe der allgemeinen Formel

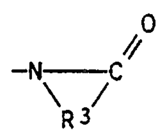

wobei $R^3$ eine verzweigte oder lineare Alkylengruppe mit 2 bis 15 C-Atomen darstellt.

Nur stellvertretend seien hier β-Propiolactame (Azetidin-2-one) der allgemeinen Formel

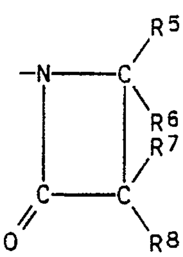

wobei die Substituenten $R^5$ bis $R^8$ eine Alkylgruppe mit 1 bis 6 C-Atomen oder ein Wasserstoffatom sein können, genannt. Diese werden von R. Graf in Angew. Chem. 74 (1962), 523-530 und H. Bastian in Angew. Chem. 80 (1968), 304-312 beschrieben. Beispiele hierfür sind 3,3′-Dimethyl-3-propiolactam, 2-Pyrrolidone

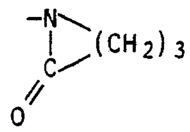
,

ε-Caprolactam

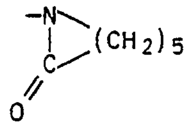
,

7-Önantholactam, 8-Capryllactam und 12 Laurinlactam, wie sie auch von H. Dachs, Angew. Chemie 74 (1962), 540-45 beschrieben werden.

Von diesen werden 2-Pyrrolidone und ε-Caprolactame besonders bevorzugt.

Vorzugsweise sind die Lactamgruppen wie in

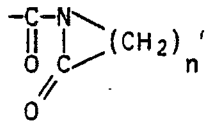

über eine Carbonylgruppe am Stickstoff in die entsprechenden Monomeren eingebaut.

Ein besonders bevorzugtes Beispiel hierfür ist N-(Meth)acryloyl-ε-Caprolactam

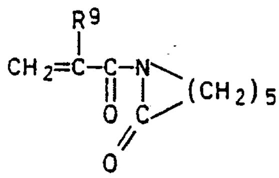

wobei $R^9$ ein Wasserstoffatom oder eine Methylgruppe ist.

Der Anteil der Monomeren mit Lactamgruppen an den Komponenten B beträgt 0,1 bis 30 Gew.%, vorzugsweise 0,1 bis 5 Gew.%, bezogen auf die Komponente B.

Daraus ergeben sich für Komponente B beispielsweise folgende Zusammensetzungen

$B_1$) 95 bis 99,9 Gew.% Styrol, α-Methylstyrol und/oder p-Methylstyrol

$B_2$) 0,1 bis 5 Gew.% N-(Meth)acryloyl-ε-caprolactam

oder, falls Monomere $B_3$ enthalten sind

$B_1$) 55 bis 91 % Styrol, α-Methylstyrol und/oder p-Methylstyrol

$B_2$) 0,1 bis 5 Gew.% N-(Meth)acryloyl-ε-caprolactam

$B_3$) 8 bis 40 Gew.% (Meth)acrylnitril.

Als polymere Komponenten mit Hydroxylgruppen sind prinzipiell alle Polymere mit Hydroxylgruppen, die im wesentlichen frei zur Verfügung stehen, geeignet.

Als erste Gruppe besonders geeigneter Polymerer dieses Typs sind Polykondensate aus aliphatischen oder aromatischen Diolen oder höherwertigen Alkoholen mit Epihalogenhydrinen zu nennen. Derartige Verbindungen und Verfahren zu ihrer Herstellung sind dem Fachmann an sich bekannt, weshalb sich hier nähere Angaben erübrigen. Nur als Beispiele seien hier die Polykondensate aus Epihalogenhydrinen und Dihydroxyverbindungen, die auch zur Herstellung von Polycarbonaten eingesetzt werden können, genannt, die sich als besonders vorteilhaft herausgestellt haben. Daneben sind aber grundsätzlich auch andere, insbesondere aliphatische Diole oder höherwertige aromatische oder aliphatische Alkohole geeignet.

Wegen der leichten Zugänglichkeit wird ein Polykondensat aus Bisphenol A und Epichlorhydrin mit der Struktur

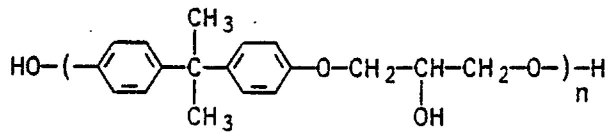

bevorzugt verwendet, welches unter der Bezeichnung Phenoxy® im Handel erhältlich ist.

Neben der Möglichkeit der Verwendung von Polymeren, die bereits in der Hauptkette die Hydroxylgruppe aufweisen, ist es auch möglich, Polymere oder Copolymere zu verwenden, die diese funktionellen Gruppen durch die Mitverwendung geeigneter Monomerer bei der Polymerisation erhalten, wobei die Gruppen dann in den Polymeren ebenfalls in der Hauptkette, aber auch in Substituenten der Hauptkette vorhanden sein können. Eine weitere Möglichkeit besteht in der Aufpfropfung von geeigneten Monomeren mit OH-Gruppen auf Pfropfgrundlagen, wobei prinzipiell alle Polymeren als Pfropfgrundlagen geeignet sind, die mit den Komponenten a) und B) nicht vollkommen unverträglich sind. Ein gewisser Grad an Unverträglichkeit kann durch eine Erhöhung des Anteils der Hydroxylgruppen ausgeglichen werden.

Geeignete Komponenten B sind daher z.B. Polymere auf der Basis von Polyolefinen, Polystyrol und Kautschukelastomeren, die Hydroxylgruppen -OH aufweisen, die entweder durch Verwendung geeigneter Comonomerer oder aber durch Aufpfropfung der funktionellen Gruppen -OH erhältlich sind. Der Anteil der Co- oder Pfropfmonomeren mit Hydroxylgruppen -OH ist abhängig davon, wie gut verträglich das Basispolymere der Komponente B mit der Komponente A ist. Je besser die Verträglichkeit, desto geringer kann der Anteil der OH-Gruppen sein. Aus dem Vorstehenden ergibt sich, daß eine Vielzahl von polymeren Verbindungen als Komponente B geeignet sind, von denen nachfolgend nur als Beispiel einige besonders bevorzugte Arten näher vorgestellt werden.

Die erste Gruppe sind Polymere aus Vinylphenylcarbinolen und Copolymere der vorstehend genannten Basispolymeren mit einem Gehalt von bis zu 100 mol% Vinylphenylcarbinolen, wobei sich Vinylphenyldimethylcarbinole und insbesondere Vinylphenylhexafluorodimethylcarbinol als besonders geeignet erwiesen haben. Als Basispolymere oder Pfropfgrundlage eignen sich wiederum vorteilhaft die vorstehend genannten Arten von Polymeren.

Als zweite Gruppe seien Polymere auf der Basis von Vinylphenolen und Copolymere der vorstehenden Basispolymeren mit Vinylphenolen genannt, die im Kern auch Substituenten enthalten können. Substituenten, die die Acidität des phenolischen Wasserstoffs erhöhen, sind besonders geeignet, so z.B. Halogensubstituenten, aber auch andere elektronenanziehende Substituenten.

Daneben sind grundsätzlich Polymere und Copolymere mit allen polymerisierbaren oder pfropfbaren Alkoholen zu nennen.

Die Herstellung der Komponente B mit Hydroxylgruppen kann nach üblichen Verfahren zur Polykondensation bzw. Pfropf- oder Copolymerisation erfolgen, weshalb sich hier nähere Angaben erübrigen.

Als Komponente B geeignet sind auch Olefinpolymere, welche Epoxygruppen enthalten. Die Epoxygruppen können in das Olefinpolymere durch Copolymerisation oder Pfropfpolymerisation mit Epoxygruppen-tragenden copolymerisierbaren Monomeren oder durch Epoxidierung eines reagierenden Olefinpolymeren eingebaut werden. Vorteilhaft sind diese Polymeren aus 0,1 bis 50 Gew.%, insbesondere 0,5 bis 10 Gew.%, Monomeren mit Epoxygruppen aufgebaut.

Bevorzugt sind Copolymere aus mindestens 50, im besonderen mindestens 60 Gew.% aus einem oder mehreren Olefinen mit 2 bis 10 Kohlenstoffatomen, die außerdem mindestens ein copolymerisierbares Monomeres mit Epoxygruppen und gegebenenfalls weitere copolymerisierbare Monomere enthalten.

Bevorzugte Olefine in solchen Copolymeren sind Ethylen, Propylen, Buten-1, Isobutylen, Penten-1, Hexen-1, Hepten-1, Octen-1 oder Gemische, vorzugsweise Ethylen und Propylen.

Bevorzugte epoxygruppentragende Monomere sind Ether der allgemeinen Formel

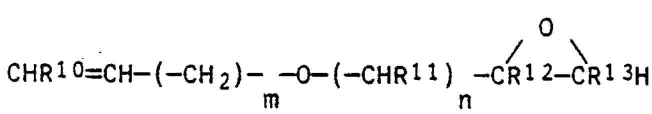

wobei m = eine ganze Zahl zwischen 0 und 20,
n = eine ganze Zahl zwischen 1 und 10
und $R^{10}$, $R^{11}$, $R^{12}$, $R^{13}$ = H oder eine Alkylgruppe mit 1 bis 8 C-Atomen darstellen.

Bevorzugt ist m = 0 oder 1, n = 1 und $R^1$, $R^2$, $R^3$ = H.

Bevorzugte Verbindungen sind Allylglycidylether oder Vinylglycidylether. Weitere epoxygruppentragende Monomere sind epoxygruppentragende Olefine der allgemeinen Formel

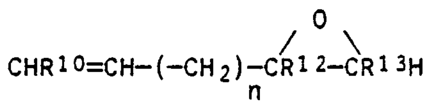

wobei m, $R^{12}$, $R^{13}$ und $R^{14}$ die gleiche Bedeutung wie in der vorausgehenden Formel haben; bevorzugt ist n = 1 bis 5, $R^{10}$ ist H oder Methyl und $R^{12}$ und $R^{13}$ sind H, Methyl oder Ethyl.

Besonders bevorzugt sind Epoxygruppen tragende Ester der Acrylsäure oder Methacrylsäure. Besondere technische Bedeutung haben Glycidylacrylat bzw. Glycidylmethacrylat erlangt.

Bevorzugte Olefinpolymere sind aufgebaut aus

a) 50 bis 90 Gew.% Olefinen mit 2 bis 10 Kohlenstoffatomen, vorzugsweise Ethylen

b) 1 bis 50 Gew.% Glycidylacrylat und/oder Glycidylmethacrylat und gegebenenfalls

c) 1 bis 49 Gew.% mindestens eines anderen copolymerisierbaren Monomeren,

wobei sich die Komponenten a, b und c jeweils auf 100 Gew.% ergänzen.

Die Glastemperatur des Olefinpolymeren liegt vorzugsweise unter 0 °C, besonders bevorzugt unter -20 °C. Bevorzugte copolymerisierbare Monomere sind (Meth)acrylate, Vinylester, Vinylether und Methylbutenol. Beispielhaft seien genannt Methyl(meth)acrylat, Ethyl(meth)acrylat, Propyl(meth)acrylat, Butyl(meth)-acrylat, besonders bevorzugt sind n-Butylacrylat und 2-Ethylhexylacrylat.

Besonders bevorzugte Olefinpolymerisate sind aufgebaut aus

a) 50 bis 98 Gew.% Ethylen

b) 1 bis 40 Gew.% Glycidyl(meth)acrylat und

c) 1 bis 45 Gew.% n-Butylacrylat und/oder 2-Ethylhexylacrylat,

besonders bewährt haben sich Olefinpolymerisate aus

a) 60 bis 95 Gew.% Ethylen

b) 3 bis 20 Gew.% Glycidyl(meth)acrylat

c) 10 bis 35 Gew.% n-Butylacrylat und/oder 2-Ethylhexylacrylat.

Die Olefinpolymeren können durch beliebige Methoden hergestellt werden, wie statistische Copolymerisation, Blockcopolymerisation und Pfropfcopolymerisation.

Bevorzugt ist die statistische Copolymerisation unter hohem Druck und bei erhöhter Temperatur. Die Polymeren c) sind im allgemeinen hochmolekular und haben einen Schmelzindex (MFI 190/2, 16, DIN 53 735) von 1 bis 80.

Neben den vorstehend genannten Olefincopolymeren eignen sich auch Produkte, die Carboxylgruppen oder deren Derivate enthalten und die z.B. in der EP-A 106 027 ausführlich beschrieben sind. Auf diese Anmeldung wird hier wegen näherer Einzelheiten verwiesen.

Als letzte beispielhafte Gruppe für die Komponente B seien Styrolpolymerisate mit Carbonsäuren und/oder deren funktionellen Derivaten genannt.

Diese sind im einzelnen aus

20 bis 95 Gew.% Styrol und/oder substituierten Styrolen der allgemeinen Formel I,

0 bis 40 Gew.% eines primären und/oder sekundären Alkylesters der Acrylsäure oder Methacrylsäure mit 1 bis 8 C-Atomen im Alkoholrest, Acrylnitril und/oder Methacrylnitril,

1 bis 30 Gew.% einer polymerisierbaren Carbonsäure und/oder eines tertiären Esters derselben und/oder eines Anhydrids einer polymerisierbaren Carbonsäure mit 1 bis 20 C-Atomen

aufgebaut.

Unter den tertiären Estern der Carbonsäuren werden Ester der Acryl- und Methacrylsäure, insbesondere tert.-Butylacrylat bevorzugt. Als Anhydrid sei hier stellvertretend nur Maleinsäureanhydrid genannt; als Säuren seien Acrylsäure, Maleinsäure und Fumarsäure erwähnt.

Als Beispiele für diese Gruppe seien stellvertretend Copolymerisate aus Styrol und Maleinsäureanhydrid, die gegebenenfalls noch Acrylnitril und/oder primäre oder sekundäre Alkylacrylate enthalten.

Von den vorstehend genannten, als Komponente B geeigneten Polymeren mit funktionellen Gruppen werden Polymere mit OH-Gruppen, insbesondere das Polykondensat aus Epichlorhydrin und Bisphenol A, Styrol/Acrylnitril/Maleinsäureanhydrid-Copolymere, Styrol/Glycidylmethacrylat-Copolymere und Olefincopolymere mit Epoxygruppen besonders bevorzugt.

Wesentlich ist, daß mindestens eine der Komponenten $a_{223}$), $a_{33}$) oder B) vorhanden ist. Selbstverständlich können auch zwei oder alle drei Komponenten vorhanden sein.

Die reaktiven Epoxy- und/oder Carboxylgruppen und/oder Hydroxylgruppen wirken vermutlich als Haftvermittler zwischen dem Polyester $a_1$) und dem Pfropfpolymeren $a_2$). Ob diese Haftvermittlung auf der Bildung kovalenter chemischer Bindungen oder auf physikalischen Wechselwirkungen (von der Waals, Dipol-Dipol etc.) beruht, kann nicht mit Sicherheit gesagt werden.

Als Komponente C enthalten die erfindungsgemäßen Formmassen 5 bis 50, insbesondere 7 bis 45 und besonders bevorzugt 10 bis 40 Gew.%, bezogen auf das Gesamtgewicht der Formmassen, an Glasfasern. Dabei handelt es sich um kommerziell erhältliche Produkte.

Diese haben in der Formmasse im allgemeinen eine mittlere Länge von 0,1 bis 0,5 mm, vorzugsweise von 0,1 bis 0,4 mm und einen Durchmesser im Bereich von 6 bis 20 µm. Besonders bevorzugt sind Glasfasern aus E-Glas. Zur Erzielung einer besseren Haftung können die Glasfasern mit Organosilanen, Epoxisilanen oder anderen Polymerüberzügen beschichtet sein.

Neben den Komponenten A) bis C) können die erfindungsgemäßen Formmassen übliche Zusatzstoffe und Verarbeitungshilfsmittel enthalten.

Übliche Zusatzstoffe sind beispielsweise Stabilisatoren und Oxidationsverzögerer, Mittel gegen Wärmezersetzung und Zersetzung durch ultraviolettes Licht, Gleit- und Entformungsmittel, Färbemittel, wie Farbstoffe und Pigmente, faser- und pulverförmige Füll- und Verstärkungsmittel und Weichmacher. Solche Zusatzstoffe werden in den üblichen wirksamen Mengen eingesetzt.

Die Stabilisatoren können den Massen in jedem Stadium der Herstellung der thermoplastischen Massen zugesetzt werden. Vorzugsweise werden die Stabilisatoren zu einem frühen Zeitpunkt zugesetzt, um zu verhindern, daß die Zersetzung bereits beginnt, bevor die Masse geschützt werden kann. Solche Stabilisatoren müssen mit der Masse verträglich sein.

Zu den Oxidationsverzögerern und Wärmestabilisatoren, die den thermoplastischen Massen gemäß der Erfindung zugesetzt werden können, gehören diejenigen, die allgemein zu Polymeren zugesetzt werden, wie Halogenide von Metallen der Gruppe I des periodischen Systems, z.B. Natrium-, Kalium-, Lithium-Halogenide in Verbindung mit Kupfer-(I)-Halogeniden, z.B. Chlorid, Bromid oder Jodid. Ferner sind geeignete Stabilisatoren sterisch gehinderte Phenole, Hydrochinone, verschiedene substituierte Vertreter dieser Gruppe um Kombinationen derselben in Konzentrationen bis 1 Gew.%, bezogen auf das Gewicht der Mischung.

Als UV-Stabilisatoren kann man ebenfalls diejenigen, die allgemein zu Polymeren zugesetzt werden, in Mengen bis zu 2,0 Gew.%, bezogen auf das Gesamtgewicht der Mischung verwenden. Beispiele für UV-Stabilisatoren sind verschiedene substituierte Resorcine, Salicylate, Benzotriazole, Benzophenone und dergleichen.

Geeignete Gleit- und Entformungsmittel, die z.B. in Mengen bis zu 1 Gew.% der thermoplastischen Masse zugesetzt werden, sind Stearinsäuren, Stearylalkohol, Stearinsäureester und -amide.

Ferner können zugesetzt werden organische Farbstoffe wie Nigrosin, Pigmente, z.B. Titandioxid, Cadmiumsulfid, Cadmiumsulfid-selenid, Phthalocyanine, Ultramarinblau oder Ruß.

Auch Keimbildungsmittel, wie Talkum, Calciumfluorid, Natriumphenylphosphinat, Aluminiumoxid oder feinteiliges Polytetrafluorethylen können in Mengen z.B. bis zu 5 Gew.%, bezogen auf die Masse, angewandt werden. Weichmacher, wie Phthalsäuredioctylester, Phthalsäuredibenzylester, Phthalsäurebutylbenzylester, Kohlenwasserstofföle, N-(n-Butyl)benzolsulfonamid, o- und p-Toluolethylsulfonamid werden vorteilhaft in Mengen bis etwa 20 Gew.%, bezogen auf die Formmasse, zugesetzt. Färbemittel, wie Farbstoffe und Pigmente können in Mengen bis zu etwa 5 Gew.%, bezogen auf die Formmasse, zugesetzt werden.

Die erfindungsgemäßen thermoplastischen Formmassen können hergestellt werden indem man die Komponenten $a_1$, $a_2$, $a_3$ und B mischt, in einem Extruder aufschmilzt und die Glasfasern über einen Einlaß am Extruder zuführt. Derartige Verfahren sind an sich bekannt und in der Literatur beschrieben. Die Mischtemperaturen im Extruder liegen im allgemeinen im Bereich von 240 bis 280 °C. Die erfindungsgemäßen Formmassen zeichnen sich durch eine gute Festigkeit, hohe Schlagzähigkeit und eine besonders gute Oberflächenstruktur der daraus hergestellten Formteile aus. Darüber hinaus wird auch eine Verbesserung der Langzeitstabilität gegen Wasser und Hitzeeinwirkung im Vergleich zu entsprechenden Massen ohne die Komponente B erzielt.

Beispiele 1 bis 10

Es wurden folgende Komponenten eingesetzt:

$a_1$ Polybutylenterephthalat mit einer Viskositätszahl von 108, bestimmt nach DIN 53 728, Teil 3

$a_2$/1 Pfropfpolymerisat aus

| | | |
|---|---|---|
| 58,8 Gew.% n-Butylacrylat<br>1,2 Gew.% Dihydrodicyclopentadienylacrylat | | Pfropfgrundlage |
| 30 Gew.% Styrol<br>10,3 Gew.% Acrylnitril | Pfropfhülle | |

mit einem Gewichtsmittelwert des Teilchendurchmessers ($d_{50}$) von 250 nm, hergestellt nach dem in der DE-OS 24 44 584 beschriebenen Verfahren

$a_2$/2 Pfropfpolymerisat aus

| | | |
|---|---|---|
| 58,5 Gew.% n-Butylacrylat<br>1,2 Gew.% Dihydrodicyclopentadienylacrylat | | Pfropfgrundlage |
| 28,5 Gew.% Styrol<br>9,8 Gew.% Acrylnitril<br>2 Gew.% Glycidylmethacrylat | Pfropfhülle | |

hergestellt wie $a_2$/1, mit einem $d_{50}$ von 250 nm.

$a_3$/1 Styrol/Acrylnitril-Copolymerisat aus 81 Gew.% Styrol und 19 Gew.% Acrylnitril mit einer Viskositätszahl von 100, gemessen in DMF, 0,5 %ig bei 25 °C

$a_3$/2 Styrol/Acrylnitril-Glycidylmethacrylat-Copolymerisat aus 77 Gew.% Styrol, 5 Gew.% Glycidylmethacrylat und 18 Gew.% Acrylnitril, mit einer Viskositätszahl von 87, gemessen 0,5 gew.%ig in DMF bei 25 °C

C Glasfasern aus E-Glas.

Die Komponenten $a_1$, $a_2$ und $a_3$ wurden gemischt, in einem Extruder aufgeschmolzen und die Glasfasern (C) der Schmelze über den Extruder zugeführt. Die Extrusionstemperatur betrug 260 °C. Dann wurden die Massen in ein Wasserbad extrudiert, granuliert und getrocknet. Anschließend wurden ohne weitere Nachbehandlung auf einer Spritzgußmaschine Prüfkörper hergestellt.

Die mechanischen Eigenschaften wurden folgendermaßen bestimmt:

| | |
|---|---|
| E-Modul: | DIN 53 457 |
| Schlagzähigkeit $a_n$: | DIN 53 453 (bei 23 °C) |
| Kerbschlagzähigkeit: | DIN 53 453 (bei 23 °C) |

Die Zusammensetzungen der Formmassen und die Ergebnisse der Messungen sind in der Tabelle dargestellt.

Tabelle

| (alle Mengenangaben in Gew.%) | | | | | | | | | |
|---|---|---|---|---|---|---|---|---|---|
| Nr. | $a_1$ | $a_2$/1 | $a_2$/2 | $a_3$/1 | $a_3$/2 | C | Elastizitätsmodul N/mm | Schlagzähigkeit kJ/m² | Kerbschlagzähigkeit kJ/m² |
| 1* | 49 | 11 | | 10 | | 30 | 9300 | 35 | 7,5 |
| 2* | 42 | 14 | | 14 | | 30 | 9300 | 34 | 8,0 |
| 3* | 56 | 12 | | 12 | | 20 | 6600 | 31 | 6,2 |
| 4 | 49 | 11 | | | 10 | 30 | 9500 | 36 | 8,1 |
| 5 | 49 | | 11 | 10 | | 30 | 9400 | 38 | 9,1 |
| 6 | 49 | | 11 | | 10 | 30 | 9500 | 37 | 8,9 |
| 7 | 42 | | 14 | 14 | | 30 | 9300 | 37 | 9,5 |
| 8 | 42 | 14 | | | 14 | 30 | 9400 | 36 | 9,2 |
| 9 | 56 | | 12 | 12 | | 20 | 6800 | 33 | 7,3 |
| 10 | 56 | | 12 | | 12 | 20 | 6900 | 33 | 7,2 |

* = Vergleichsversuch

Beispiele 11 bis 15

Es wurden folgende Komponenten eingesetzt:

$a_1$) Polybutylenterephthalat mit einer Viskositätszahl, bestimmt nach DIN 53 728, Teil 3 von 108

$a_2$/3 Pfropfpolymerisat aus

58,5 Gew.% n-Butylacrylat } Pfropfgrundlage
1,2 Gew.% Dicyclopentadienylacrylat }
30 Gew.% Styrol } Pfropfhülle
10 Gew.% Acrylnitril }

hergestellt nach dem in der DE-OS 24 44 584 beschriebenen Verfahren

$a_3$/3 Styrol/Acrylnitril-Copolymerisat aus 65 Gew.% Styrol und 35 Gew.% Acrylnitril mit einer Viskositätszahl von 80, gemessen in DMF, 0,5 %ig bei 25 °C

B/1 Copolymerisat aus Styrol (97 Gew.%) und Glycidylmethacrylat (3 Gew.%), hergestellt durch kontinuierliche thermische Copolymerisation unter Zusatz von 15 Gew.% Ethylbenzol bei einer Temperatur von 145 °C und einem Druck von 800 kPa ($M_w$ = 120.000; Gewichtsmittelwert)

B/2 Terpolymerisat aus Styrol, Acrylnitril und Maleinsäureanhydrid (Gew.-Verhältnis 68/22/10) mit einer Viskositätszahl von 80, gemessen 0,5 gew%ig in DMF bei 25 °C

B/3 Polykondensat aus Bisphenol A und Epichlorhydrin (Phenoxy® der Union Carbide)

B/4 Terpolymerisat aus Ethylen/n-Butylacrylat und Glycidylmethacrylat (Gew.-Verhältnis 65/32/3), hergestellt nach dem in der EP-A 206 267 beschriebenen Verfahren.

C Glasfasern aus E-Glas

Die Komponenten $a_1$, $a_2$, $a_3$ und B wurden gemischt, in einem Extruder aufgeschmolzen und die Glasfasern der Schmelze über den Extruder zugeführt. Die Extrusionstemperatur betrug 260 °C. Dann wurden die Massen in ein Wasserbad extrudiert, granuliert und getrocknet. Anschließend wurden ohne weitere Nachbehandlung auf einer Spritzgußmaschine Prüfkörper hergestellt.

Die mechanischen und thermischen Eigenschaften wurden folgendermaßen bestimmt:

| | |
|---|---|
| Vicat B: | DIN 53 560 |
| Biegefestigkeit: | DIN 53 452 |
| E-Modul: | DIN 53 457 |
| Schlagzähigkeit $a_n$: | DIN 53 453 |
| Kerbschlagzähigkeit: | DIN 53 453 |
| Schädigungsarbeit: | DIN 53 443 |

Die Zusammensetzungen der Formmassen sind in Tabelle 1, die Ergebnisse der Messungen in Tabelle 2 dargestellt.

Tabelle 1

| Zusammensetzung der Formassen | | | | | | | |
|---|---|---|---|---|---|---|---|
| Beispiel | Anteil [Gew.%] | Komponente A | | | B | | C |
| | | Zusammensetzung [Gew.%] | | | Art | Menge | |
| | | $a_1$ | $a_2/3$ | $a_3/3$ | | | |
| 11 | 74,1 | 60 | 20 | 20 | B/1 | 3,7 | 22,2 |
| 12 | 74,1 | 60 | 20 | 20 | B/2 | 3,7 | 22,2 |
| 13 | 74,1 | 60 | 20 | 20 | B/3 | 3,7 | 22,2 |
| 14 | 74,1 | 60 | 20 | 20 | B/4 | 3,7 | 22,2 |
| 15 (Vgl.) | 76,9 | 60 | 20 | 20 | - | - | 23,1 |

Tabelle 2

| Meßergebnisse | | | | | |
|---|---|---|---|---|---|
| | 11 | 12 | 13 | 14 | 15V |
| Vicat B [°C] | 133 | 132 | 128 | 125 | 125 |
| Biegefestigkeit $\sigma_{bB}$ [N/mm²] | 170 | 168 | 164 | 145 | 145 |
| E-Modul $E_Z$ [N/mm²] | 9.600 | 9.700 | 9.400 | 8.500 | 8.500 |
| Schlagzähigkeit $a_n$ [kJ/m²] | 35 | 33 | 32 | 41 | 29 |
| Kerbschlagzähigkeit $a_k$ [kJ/m²] | 8,5 | 8,0 | 7,5 | 12 | 6,5 |
| Schädigungsarbeit $w_{50}$ [N•m] | 0,7 | 0,6 | 0,6 | 2,5 | 0,5 |
| nach Lagerung 30 d 100 °C: | | | | | |
| $\sigma_{bB}$ [N/mm²] | 145 | 140 | 140 | 125 | 110 |
| $a_n$ [kJ/m²] | 27 | 25 | 27 | 36 | 17 |
| Fertigteiloberfläche | s.gut | s.gut | s.gut | s.gut | gut |

## Ansprüche

1. Thermoplastische Formmassen, enthaltend als wesentliche Komponenten
A) 45 bis 90 Gew.% einer Mischung aus
$a_1$) 50 bis 80 Gew.% eines Polyesters
$a_2$) 10 bis 25 Gew.% eines Pfropfpolymerisats aufgebaut aus
$a_{21}$) 50 bis 90 Gew.% einer Pfropfgrundlage aus einem kautschukelastischen Polymeren auf Basis von
$a_{211}$) 95 bis 99,9 Gew.% eines $C_2$-$C_{10}$-Alkylacrylats und

$a_{212}$) 0,1 bis 5 Gew.% eines polyfunktionellen Monomeren mit mindestens zwei olefinischen, nicht konjugierten Doppelbindungen

$a_{22}$) 10 bis 50 Gew.% einer Pfropfauflage aus

$a_{221}$) 50 bis 90 Gew.% Styrol oder substituierten Styrolen der allgemeinen Formel I

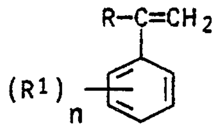

(I)

wobei R einen Alkylrest mit 1 bis 8 C-Atomen, ein Wasserstoffatom oder ein Halogenatom und $R^1$ einen Alkylrest mit 1 bis 8 C-Atomen oder ein Halogenatom darstellen und n den Wert 0, 1, 2 oder 3 hat oder deren Mischungen und

$a_{222}$) 10 bis 49 Gew.% Acrylnitril oder Methacrylnitril oder deren Mischungen

$a_{223}$) 0 bis 30 Gew.% eines polymerisierbaren Monomeren mit Carboxyl-, Carboxylderivat-, Hydroxyl- oder Epoxygruppen,

und

$a_3$) 10 bis 25 Gew.% eines Copolymerisats aus

$a_{31}$) 50 bis 90 Gew.% Styrol oder substituierten Styrolen der allgemeinen Formel I oder deren Mischungen und

$a_{32}$) 10 bis 49 Gew.% Acrylnitril oder Methacrylnitril oder deren Mischungen,

$a_{33}$) 0 bis 30 Gew.% eines polymerisierbaren Monomeren mit Carboxyl-, Carboxylderivat-, Hydroxyl- oder Epoxygruppen,

B) 0 bis 20 Gew.% einer polymeren Komponente mit Carboxyl-, Carboxylderivat-, Hydroxyl- oder Epoxygruppen, und

C) 5 bis 50 Gew.% Glasfasern,

mit der Maßgabe, daß mindestens eine der Komponenten $a_{223}$), $a_{33}$) oder B) vorhanden ist.

2. Thermoplastische Formmassen nach Anspruch 1, enthaltend als wesentliche Komponenten

A) 55 bis 90 Gew.% einer Mischung aus

$a_1$) 50 bis 80 Gew.% Polyethylenterephthalat oder Polybutylenterephthalat oder deren Mischungen,

$a_2$) 10 bis 25 Gew.% Pfropfpolymerisat aus

$a_{21}$) 50 bis 90 Gew.% Pfropfgrundlage auf Basis von

$a_{211}$) 95 bis 99,9 Gew.% n-Butylacrylat und/oder 2-Ethylhexylacrylat und

$a_{212}$) 0,1 bis 5 Gew.% eines difunktionellen Monomeren, und

$a_{22}$) 10 bis 50 Gew.% einer Pfropfauflage aus

$a_{221}$) 50 bis 90 Gew.% Styrol oder $\alpha$-Methylstyrol oder deren Mischungen und

$a_{222}$) 10 bis 49 Gew.% Acrylnitril oder Methacrylnitril oder deren Mischungen

$a_{223}$) 0 bis 30 Gew.% eines polymerisierbaren Monomeren mit Carboxyl-, Carboxylderivat-, Hydroxyl- oder Epoxygruppen

$a_3$) 10 bis 25 Gew.% eines Copolymerisats aus

$a_{31}$) 50 bis 90 Gew.% Styrol oder $\alpha$-Methylstyrol oder deren Mischungen,

$a_{32}$) 10 bis 49 Gew.% Acrylnitril oder Methacrylnitril oder deren Mischungen,

$a_{33}$) 0 bis 30 Gew.% eines polymerisierbaren Monomeren mit Carboxyl-, Carboxylderivat-, Hydroxyl- oder Epoxygruppen

B) 0 bis 20 Gew.% einer polymeren Komponente mit Carboxyl-, Carboxylderivat-, Hydroxyl- oder Epoxygruppen, und

C) 10 bis 40 Gew.% Glasfasern,

mit der Maßgabe, daß mindestens eine der Komponenten $a_{223}$), $a_{33}$) oder B) vorhanden ist.

3. Verwendung der thermoplastischen Formmassen gemäß den Ansprüchen 1 und 2 zur Herstellung von Formkörpern und Formteilen.

4. Formkörper, erhältlich aus thermoplastischen Formmassen gemäß den Ansprüchen 1 und 2 als wesentliche Komponenten.